# EUROPEAN PATENT APPLICATION

(11) **EP 0 612 946 A1**
(43) Date of publication of application: **31.08.1994**
(21) Application number: 94301293.0
(22) Date of filing: 23.02.1994
(51) Int. Cl.: F16L 5/02

(54) **Improvements in or relating to transits**

(30) Priority: 26.02.1993 GB 9303945
(71) Applicant: HAWKE CABLE GLANDS LIMITED, Walsall, West Midlands WS9 8DS (GB)
(72) Inventor: Jackson, Carl, Audenshaw, Lancashire, M34 5LE (GB); Norris, Trevor William, Ashton-under-Lyne, Lancashire (GB)
(74) Representative: Knowles, Audrey Elizabeth

(57) **Abstract**

A cable transit (1) has a plurality of modular blocks (6,7) being either cable blocks (6) surrounding a cable (4) or blanking blocks (7) for closing a modular space arranged in rows in a frame (2), and a compression and packer assembly including a pressure plate (15) and packer blocks (16) for applying pressure to the assembled array of blocks (6,7) and cables (4) within the frame (2). The pressure plate (15) has a metal body (18) seated on the top row of blocks (6,7) with an edge strip (22) of low thermal conductivity plastics on each side edge for insulating the body (18) to reduce heat transfer across the transit (1).

## Description

This invention concerns improvements in or relating to transits that are used where elongate articles such as cables or pipes are required to penetrate a partition such as a bulkhead or deck.

A conventional transit has a frame defining a rectangular opening for the cables or pipes with each cable or pipe being surrounded by a resilient block. The blocks are arranged in rows with any gaps being filled by solid blocks and the opening is closed by an end packer assembly that maintains the array of blocks under pressure to clamp and seal the blocks to each other and to the frame and to the cables or pipes.

The frame and parts of the end packer assembly are commonly made of metal having a high thermal conductivity. As a result, to comply with safety standards for heat transfer across the transit, it has been necessary when installing such transits to provide additional insulation on one or both sides of the transit. This is inconvenient and adds to the installation costs.

The present invention has been made from a consideration of this problem.

According to one aspect of the invention there is provided a transit for cables or the like comprises a rigid frame defining a rectangular opening, a plurality of blocks for assembly in rows within the opening between opposed side walls of the frame, the blocks being adapted to surround a cable or blank of a modular space, a pressure plate comprising a metal body for seating on the top row of blocks between the side walls of the frame with opposite side edges on entry and exit sides of the opening, and a plurality of packer blocks for insertion into a clearance space between the plate and an end wall of the frame to apply pressure to the assembled array of modular blocks and cables for sealing the blocks to each other and the frame and the cables characterised in that the plate has low thermal conductivity material on at least one side edge of the body.

The main advantage of the invention is that the metal body of the pressure plate is insulated from the environment by the low thermal conductivity material on at least one side of the transit so as to reduce heat transfer by the metal body across the transit. This reduction in heat transfer is achieved without any significant affect on the pressure applied through the metal body of the pressure plate to the assembled array of modular blocks and cables by the packer blocks for sealing the assembled array of modular blocks and cables. Furthermore, the metal body is resistant to degradation or deformation under the applied loads thereby ensuring sealing efficiency is maintained even after a prolonged period of time.

The low thermal conductivity material is preferably provided on both side edges so that the metal body is insulated from the environment on both sides of the transit.

Advantageously, the metal body seats directly on the top row of modular blocks and the low thermal conductivity material is provided by respective edge strips on opposite side edges of the body with the edge strips being adapted to locate the plate in the frame opening and/or to locate the top row of blocks.

The or each edge strip may be integral with the metal body. For example, the metal body may have a formation on the or each side edge that is embedded in the low thermal conductivity material of the associated edge strip during moulding thereof. Alternatively, the edge strips may be detachable allowing a damaged edge strip to be replaced.

According to another aspect of the invention there is provided a pressure plate for a transit comprising a rigid frame defining an opening through which cables are to extend, the pressure plate comprising a metal body for seating on a row of modular blocks received in the opening between opposed side walls of the frame with respective side edges of the body arranged to face towards entry and exit sides of the opening characterised in that at least one side edge of the body has an edge strip of low thermal conductivity material for insulating the metal body and reducing heat transfer across the transit.

According to yet another aspect of the invention there is provided a compression and packer assembly for a transit comprising a rigid frame defining an opening through which cables are to extend, the compression and packer assembly including a pressure plate for location within the opening between opposed side walls of the frame, a plurality of packer blocks for assembly within the opening on one side of the pressure plate, and clamping means on entry and exit sides of the opening for applying pressure to the packer blocks in a direction normal to the plane of the opening for applying pressure to an array of modular blocks and cables assembled within the opening on the other side of the pressure plate characterised in that the compression and packer assembly includes low thermal conductivity material on at least one side of the opening for insulating the compression and packer assembly and reducing heat transfer across the transit.

According to yet another aspect of the invention there is provided a rigid frame for a transit, the frame defining an opening through which cables are to extend characterised in that the frame is made of low thermal conductivity material for reducing heat transfer across the transit.

Preferably, the frame comprises opposed side walls and opposed end walls defining a rectangular opening and may be formed integrally in one piece, for example by moulding. Alternatively, the side and end walls may be formed separately and connected together by suitable means, for example tie rods extending between the side walls at the top and bottom of the frame.

The use of separate components for the side and end walls is particularly suitable for installation of the transit around an existing run of cables.

Other features, benefits and advantages of the invention in each of its aspects will be understood from the following description of an exemplary cable transit with reference to the accompanying drawings wherein:-
FIGURE 1 is a front view of a cable transit embodying the invention shown in the assembled condition with cables in situ;
FIGURE 2 is a partly sectioned side view of the cable transit shown in Figure 1;
FIGURE 3 is an isometric detail view of the pressure plate of the transit shown in Figures 1 and 2;
FIGURE 4 is a section on the line 4-4 of Figure 3;
FIGURE 5 is an exploded isometric view of the pressure plate shown in Figure 3;
FIGURE 6 is an exploded isometric view of the packer block assembly of the transit shown in Figures 1 and 2;
FIGURE 7 is a partly sectioned front view of the frame of the transit shown in Figures 1 and 2;
FIGURE 8 is a partly sectioned side view of the frame shown in Figure 7;
FIGURE 9 is an exploded isometric view of the frame shown in Figures 7 and 8; and
FIGURE 10 is an exploded isometric view of a multiple transit frame.

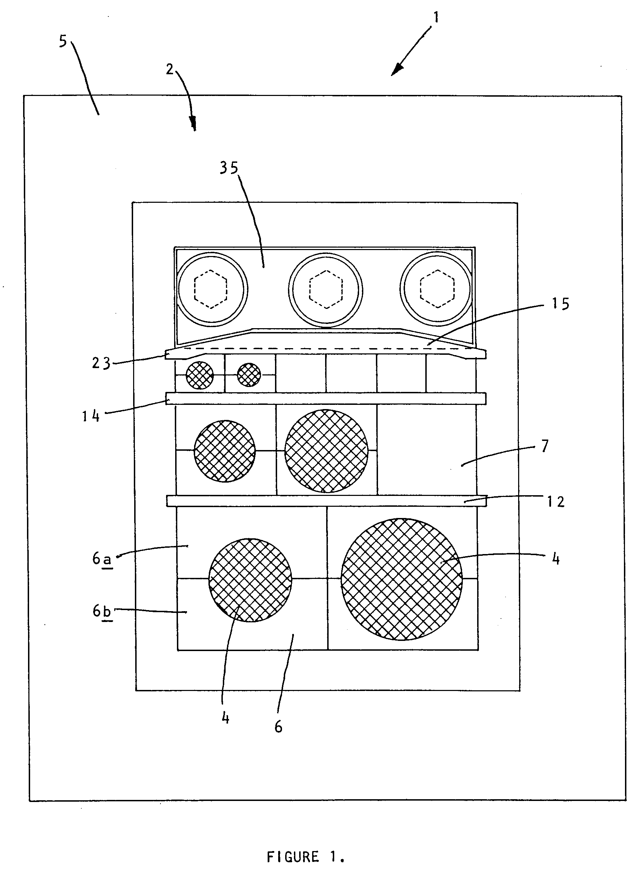

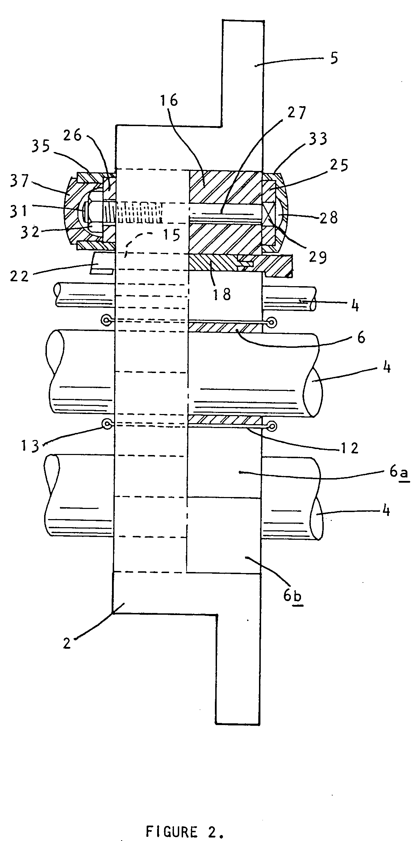

Referring first to Figures 1 and 2 of the drawings, an assembled cable transit 1 is shown comprising a rigid plastics frame 2 defining a rectangular opening 3 through which cables 4 of different sizes extend.

The frame 2 is for mounting in an aperture (not shown) in a partition such as a bulkhead or deck and has an outwardly extending peripheral flange 5 for locating against the partition on one side of the aperture.

Arranged in rows within the opening 3 is an array of modular blocks of resilient material being either a lead-through block 6 surrounding a cable 4 or a solid block 7 blanking of a space where no cable 4 is present. In this embodiment, three rows of modular blocks 6,7 are shown extending between the side walls 8,9 of the frame 2 and it will be understood that this may vary in practice according to the number of cables 4 to be accommodated.

Each block 6,7 is of rectangular cross-section and has a common length equal to the depth of the opening 3. The width and height of the blocks 6,7 are selected to a common multiple so that each row may comprise blocks of the same size or combinations of blocks of different sizes. Typical suitable dimensions are 90mm, 60mm and 30mm for square-section blocks.

Each lead-through block 6 comprises a pair of complementary half-blocks 6a, 6b defining a passageway 10 for the associated cable 4 and is preferably of the type disclosed in our UK Patent No. 2186440 having axially spaced cylindrical lands for engagement with the outer surface of the cable with adjacent lands separated by a cylindrical recess permitting resilient conformation of the lands to accommodate different cable sizes within specific limits. It will be understood, however, that the invention is not limited to this type of lead-through block and that other types of lead-through block may be used, for example lead-through blocks having an accurately sized smooth cylindrical bore for a given cable size.

The first row of modular blocks 6,7 is arranged on the lower end wall 11 of the frame and successive rows are separated by metal stay plates 12 extending between the side walls 8,9 of the frame 2.

Each stay plate 12 has a bead 13 on each side edge for locating the adjacent rows of blocks 6,7 and which also provide projections 14 at each end that engage the outer faces of the side walls 8,9 to locate the stay plate 12 against lateral displacement whilst permitting vertical displacement.

Also arranged within the opening 3 is a compression and packer assembly that completes filling of the opening and applies pressure to the assembled array of modular blocks 6,7 and cables 4 to clamp and seal the blocks 6,7 to each other and the frame 2, and to clamp and seal the lead-through blocks 6 around the cables 4.

The end packer assembly includes a pressure plate 15 for seating on the top row of blocks 6,7 and packer blocks 16 for insertion into the clearance space between the pressure plate 15 and upper end wall 17 of the frame 2 and is preferably of the type disclosed in our UK Patent No. 2186441 in which the packer blocks 16 are inserted from one side of the frame and completely fill the clearance space. It will be understood, however, that the invention is not limited to this type of end packer assembly and that other types of end packer assembly may be used in which the number, arrangement and assembly of the packer blocks is different.

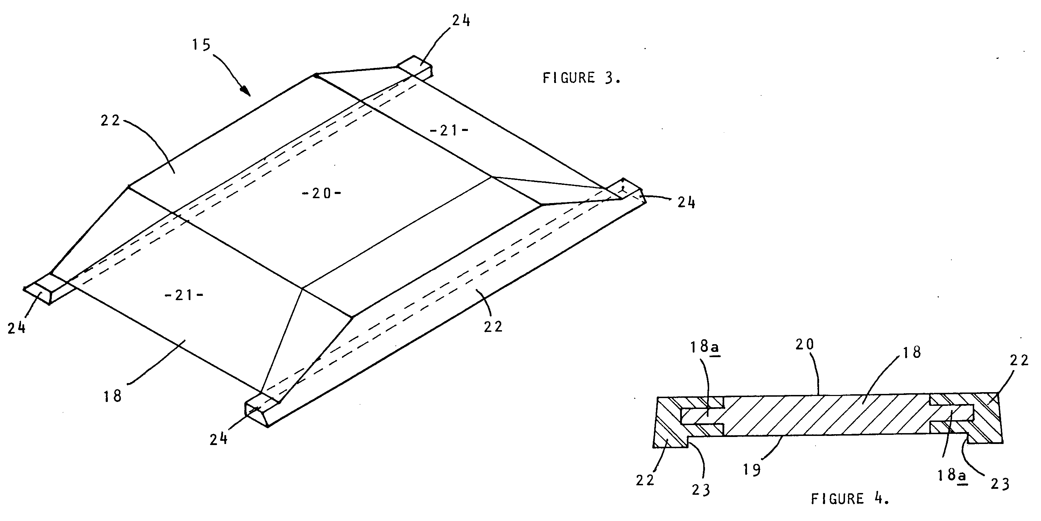

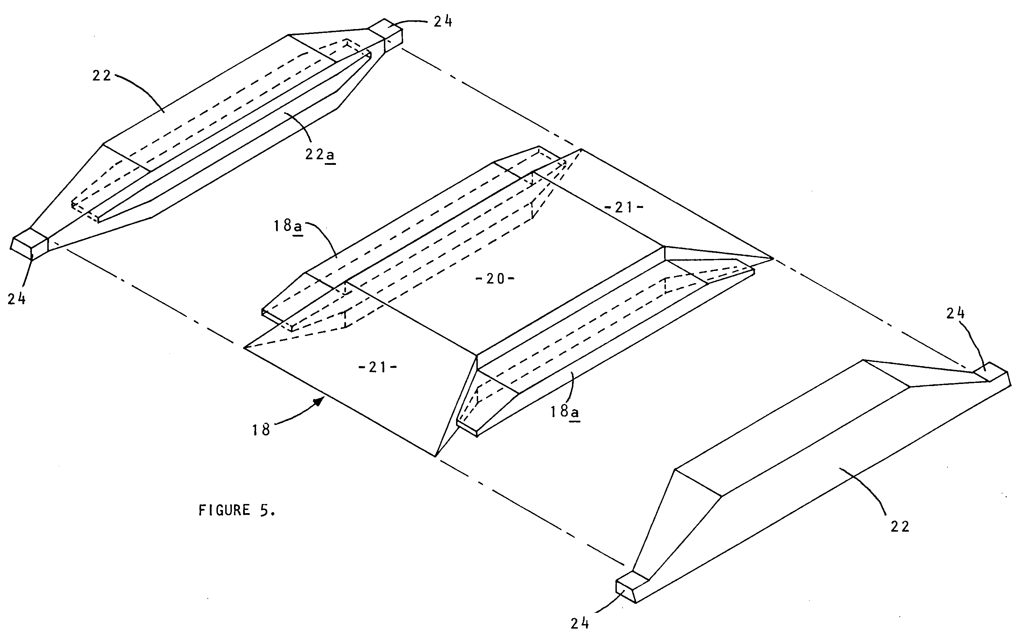

With reference to Figures 3 to 5, the pressure plate 15 comprises a metal body 18 having, on the underside, a planar surface 19 for engagement with the upper surface of the top row of modular blocks 6,7 and, on the topside, a flat centre portion 20 and opposed inclined end portions 21 for engagement with complementary surfaces of the packer blocks 16.

The body 18 extends between the side walls 8,9 of the frame and has an integral tongue 18a on each side edge for mounting a plastics edge strip 22 providing an undercut ledge 23 for locating the top row of blocks 6,7 and lugs 24 at each end that engage the outer faces of the side walls 8,9 to locate the pressure plate 15 against lateral displacement whilst permitting vertical displacement.

The edge strips 22 are moulded from suitable plastics of low thermal conductivity such as polyester reinforced with glass fibre with recesses 22a for reception of the tongues 18a. Alternatively, the edge strips 22 may be moulded into the body 18 to be integral therewith. For this, the tongues 18a may be provided with holes or other suitable formations for keying the plastics material to secure permanently the edge strips 22.

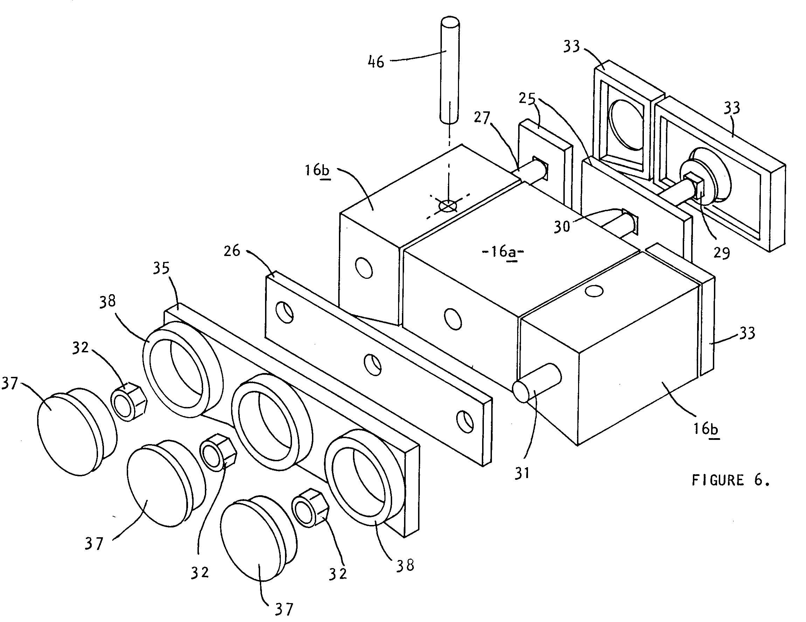

With reference to Figure 6, the packer blocks 16 comprise a centre block 16a for seating on the flat centre portion 20 of the pressure plate 15 and two outer blocks 16b for seating on the inclined end portions 21 of the pressure plate 15.

Each packer block 16a, 16b has a respective rear support plate 25 and a common front support plate 26 of metal connected by a metal stud 27 extending therethrough in a direction parallel to the longitudinal axes of the cables.

Each stud 27 has a head 28 seated against the outer face of the associated rear support plate 25 and is located against rotation by engagement of a square shank portion 29 in a square hole 30 of the associated rear support plate 25.

The free end 31 of each stud 27 projects through the front support plate 26 for threaded engagement with a respective nut 32 to clamp the support plates 25,26 together and apply pressure to the associated packer block 16.

Each rear support plate 25 is provided with an outer plastics cover 33 of complementary shape with a recess 34 for reception of the plate 25 and associated stud head 28.

The front support plate 26 is likewise provided with an outer plastics cover 35 of complementary shape with a recess 36 for reception of the plate 26 and removable plastics caps 37 for closing sockets 38 on the outer face of the cover 35 to conceal the ends 31 of the studs and associated nuts 32.

The covers 33,35 are moulded separately from the support plates 25,26 from suitable plastics of low thermal conductivity such as polyester reinforced with glass fibre for fitting over the support plates 25,26 during assembly and the caps 37 are moulded from the same low thermal conductivity plastics material as the cover 35.

In a modification, the caps 37 may be omitted and the cover 35 fitted to the support plate 26 after the nuts 32 have been tightened with the ends 31 of the studs and nuts 32 being concealed in blind recesses in the underside of the cover 35.

In a further modification, the covers 33,35 may be replaced by support plates formed from low thermal conductivity material of sufficient strength to transit the clamping force applied by the studs 27.

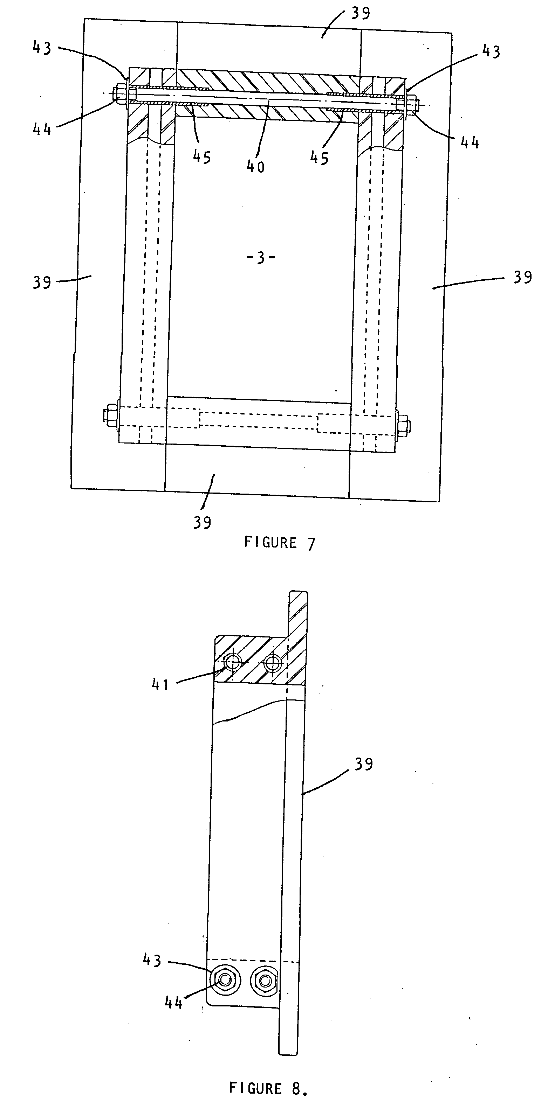

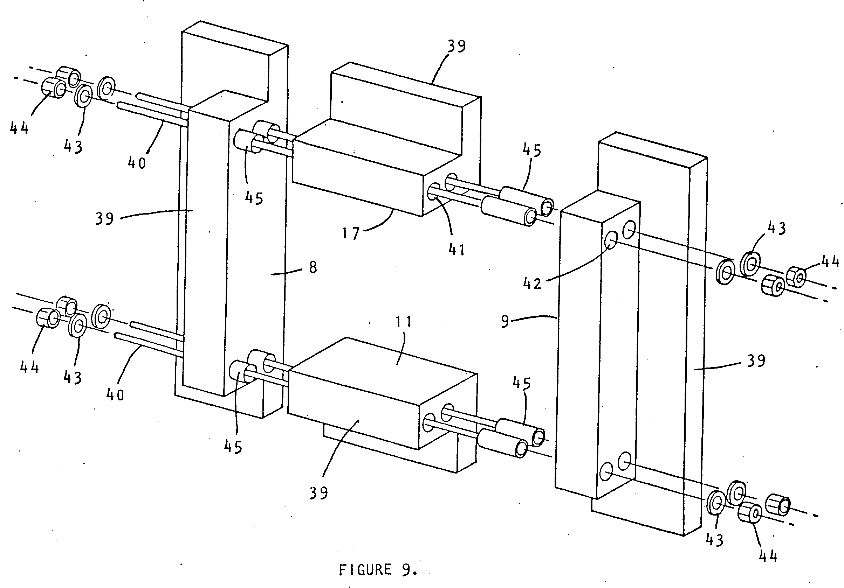

Referring to Figures 7, 8 and 9, the frame comprises separate components 39 for the side walls 8,9 and end walls 11,15 connected together by upper and lower pairs of tie rods 40 at the top and bottom of the frame.

Each tie rod 40 extends through aligned bores 41,42 in the side walls 8,9 and end walls 11,15 and has a respective washer 43 located on the projecting free ends prior to being secured by threaded engagement with respective nuts 44 to clamp the frame components 39 together.

The frame components 39 are moulded from suitable plastics of low thermal conductivity such as polyester reinforced with glass fibre and the compression loads are transferred by steel bushes 45 received in the aligned bores 41,42 at each corner of the frame 2 and which serve to locate the components 39 for assembly and resist twisting or deformation of the frame 2 under load.

The construction of the frame 2 from individual components 39 is especially suitable for installation of the transit 1 where there are existing runs of cables 4 around which the frame 2 can be assembled on site. Any other suitable means for connecting the frame components 39 together may be employed. Alternatively, the frame 2 may be formed integrally in one piece, for example by moulding, where location of the frame 2 around the cables 4 is not a problem such as new installations.

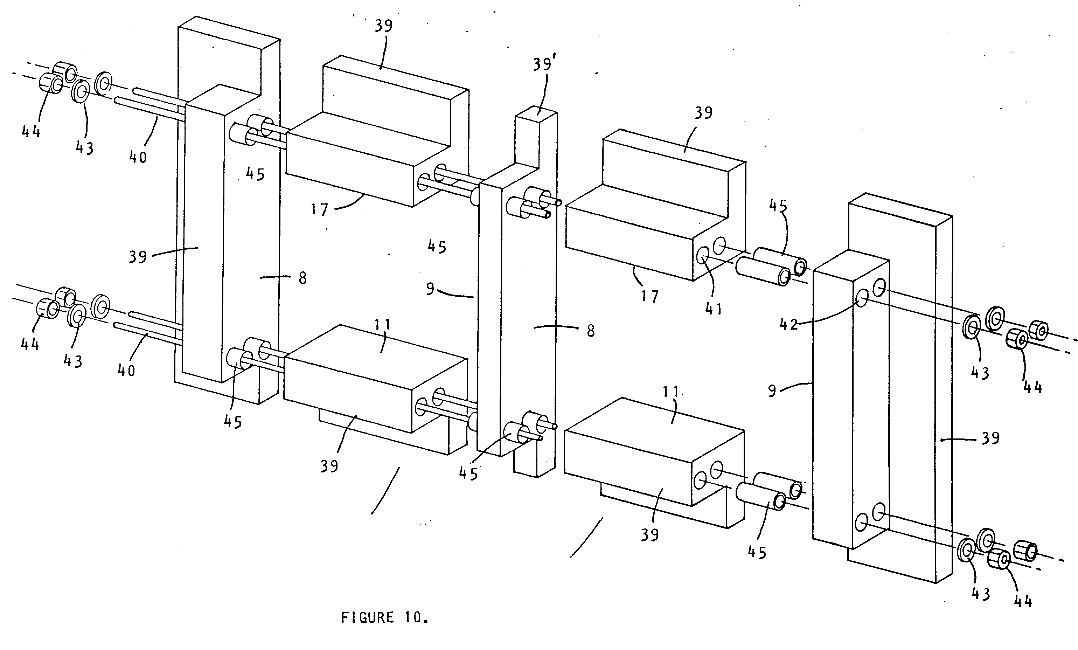

The side and end wall components 39 used to assemble the frame 2, may be used for constructing multiple transits having two or more adjoining frames 2. A double transit is shown in Figure 10 where parts corresponding to the single transit above-described are identified by the same reference numerals. For such multiple transit assembly, side walls 8,9 of adjoining frames 2 are provided by a common side wall component 39'.

Installation of the single transit 1 shown in Figures 1 to 9 will now be described. Firstly, the frame 2 is assembled and mounted in the partition aperture with the cables 4 extending through the opening 3. The modular blocks 6,7 are then assembled in rows separated by the stay plates 12 with lead-through blocks 6 surrounding the cables 4 and blanking blocks 7 used to complete any row as appropriate.

When this is completed, the pressure plate 15 is located on the top row of blocks and a compression tool or bolt (not shown) extended between the upper end wall 17 of the frame and the centre portion 20 of the pressure plate 15 to urge the plate 15 away from the upper end wall 17 to pre-load the assembled array of blocks 6,7 and cables 4.

Next the outer packer blocks 16b with associated rear support plates 25, studs 27 and covers 33 are inserted into the clearance space between the pressure plate 15 and the upper end wall 17 of the frame on opposite sides of the bolt.

Thereafter, the tool or bolt is withdrawn completely from the clearance space and the centre packer block 16b with associated rear support plate 25, stud 27 and cover 33 is inserted between the outer packer blocks 16b to complete filling of the clearance space between the pressure plate 15 and upper end wall 17 of the frame. The reactive force of the modular blocks 6,7 on removing the compression tool or bolt prior to insertion of the centre packer block 16a is counteracted by limit pins 45 mounted in the outer packer blocks 16b.

Next, the front support plate 26 and plastics cover 34 is located over the projecting ends of the studs 27 and the nuts 32 tightened to apply pressure to the packer blocks 16 in a direction parallel to the longitudinal axes of the cable. This causes resilient displacement of the block material in a direction transverse to the longitudinal axes of the cables thereby expanding the packer blocks 16 to fill completely the clearance space between the pressure plate 15 and upper end wall 17 of the frame to maintain the required clamping and sealing pressure on the assembled array of modular blocks 6,7 and cables 4. Finally, the plastics caps 37 are fitted to conceal the ends of the studs 27 and associated nuts 32.

As will be appreciated from the foregoing description of an exemplary embodiment, the low thermal conductivity plastics used in the construction of the frame and end packer assembly reduces heat transfer through the transit by avoiding exposed metal surfaces providing a high thermal conductivity path between the outer faces of the transit. In this respect, heat transfer due to the metal stay plates is negligible compared with that arising where the frame and/or pressure plate is made entirely of metal and/or the metal support plates and connector studs for the packer blocks are exposed. If desired, however, the centre portion of the stay plates could be perforated to reduce heat transfer. Alternatively, the stay plates could be formed from suitable low thermal conductivity material or provided with edge strips of low thermal conductivity material similar to the pressure plate.

It will be understood that the invention is not limited to the embodiment above-described. For example, the low thermal conductivity frame, insulated pressure plate and insulated packer blocks may be employed separately or in combination with one or both of the other features.

The body of the pressure plate may be made of any suitable metal including alloys. The glass reinforced polyester employed for the edge strips of the pressure plate and the other parts of the transit may be replaced by any other suitable low thermal conductivity material having the required strength for the intended application. Thus, ceramics, glasses, elastomers, plastics may be used separately or in combination with optional reinforcement as required.

The low thermal conductivity materials employed for any parts may also be flame-resistant, fire-resistant and/or resistant to attack by oil, chemicals, gases, water, rodents or the like and/or the effects of ageing and temperature variations to which the transit may be exposed in service, for example when installed in a partition separating hazard and non-hazardous areas to comply with industry standards. Likewise, the modular blocks and packer blocks can be made of any suitable resilient material to meet the requirements for a given use of the transit.

Finally, it will be understood that the invented transit is not limited to cables and may be used and applied to other elongate articles such as pipes or conduits. Thus, the term "cables" used herein is intended to include all such elongate articles and the scope of the invention is to be construed accordingly without limitation.

## Claims

1. A transit for cables or the like comprises a rigid frame (2) defining a rectangular opening (3), a plurality of blocks (6,7) for assembly in rows within the opening (3) between opposed side walls (8,9) of the frame (2), the blocks (6,7) being adapted to surround a cable (4) or blank of a modular space, a pressure plate (15) comprising a metal body (18) for seating on the top row of blocks (6,7) between the side walls (8,9) of the frame (2) with opposite side edges on entry and exit sides of the opening (3), and a plurality of packer blocks (16) for insertion into a clearance space between the plate (15) and an end wall of the frame (2) to apply pressure to the assembled array of modular blocks (6,7) and cables (4) for sealing the blocks (6,7) to each other and the frame (2) and the cables (4) characterised in that the plate (15) has low thermal conductivity material on at least one side edge of the body (18).

2. A transit according to Claim 1 characterised in that the metal body (18) seats directly on the top row of modular blocks (6,7) and the low thermal conductivity material is provided by respective edge strips (22) on opposite side edges of the body (18) with the edge strips (22) being adapted to locate the plate (15) in the frame opening (3) and/or to locate the top row of blocks (6,7).

3. A transit according to Claim 1 or Claim 2 characterised in that clamping means (25,26,27) is provided on the entry and exit sides of the opening (3) for applying pressure to the packer blocks (16) in a direction normal to the plane of the opening (3) and is insulated by low thermal conductivity material on at least one side of the opening (3).

4. A transit according to Claim 3 characterised in that the clamping means (25,26,27) includes support plates (25,26) made of or covered by low thermal conductivity material on the entry and exit sides of the opening (3) respectively with the packer blocks (16) therebetween.

5. A transit according to any one of the preceding Claims characterised in that the frame (2) is made of low thermal conductivity material.

6. A transit according to any preceding Claims characterised in that adjacent rows of modular blocks (6,7) are separated by a respective stayplate (12) adapted to reduce heat transfer across the transit.

7. A transit according to any one of the preceding Claims characterised in that the low thermal conductivity material comprises plastics, elastomers, ceramics, glasses or composites thereof with optional reinforcing, for example polyester reinforced with glass fibre.

8. A pressure plate for a transit comprising a rigid frame defining an opening through which cables are to extend, the pressure plate (15) comprising a metal body (18) for seating on a row of modular blocks (6,7) received in the opening (3) between opposed side walls (8,9) of the frame (2) with respective side edges of the body (18) arranged to face towards entry and exit sides of the opening (3) characterised in that at least one side edge of the body (18) has an edge strip (22) of low thermal conductivity material.

9. A pressure plate according to Claim 8 characterised in that the body (18) has an edge strip (22) of low thermal conductivity material on each side edge with the edge strips (22) being adapted for locating the metal body (18) and/or for locating the row of modular blocks (6,7) in a direction transverse to the plane of the opening (3).

10. A pressure plate according to Claim 8 or Claim 9 characterised in that the low thermal conductivity material comprises plastics, elastomers, glasses, ceramics or composites thereof with optional reinforcing, for example polyester reinforced with glass fibre.
